# EUROPEAN PATENT APPLICATION

(11) **EP 2 784 973 A1**
(43) Date of publication of application: **01.10.2014**
(21) Application number: 12852314.9
(22) Date of filing: 12.12.2012
(51) Int. Cl.: H04L 9/32

(54) **METHOD, SYSTEM, AND DEVICE FOR DIGITAL CONTENT TRANSMISSION**

(30) Priority: 24.11.2011 CN 201110378194
(71) Applicant: Peking University Founder Group Co., Ltd, Haidian District Beijing 100871 (CN); Beijing Founder Apabi Technology Ltd, Beijing 100080 (CN)
(72) Inventor: WAN, Wei, Beijing 100871 (CN); WANG, Haitao, Beijing 100871 (CN); ZUO, Fengrui, Beijing 100871 (CN)
(74) Representative: Eisenführ Speiser
(86) International application number: PCT/CN2012/086467
(87) International publication number: WO 2013/075674

(57) **Abstract**

The present disclosure describes methods, systems, and apparatuses for transmitting digital content to improve the success ratio of the transmission. The method may include: receiving a resource request transmitted from a first client terminal; searching in stored digital objects and stored certificate files for a first digital object and a first certificate file matching the resource request, respectively; and transmitting the first digital object and the first certificate file to the first client terminal to enable the first client terminal to decrypt the received digital object using the received first certificate file to obtain corresponding digital content.

## Description

This application claims the benefit of priority to Chinese Patent Application No. 201110378194.5, filed with Chinese Patent Office on November 24, 2011 and entitled "Method, System and Apparatus for Transmitting Digital Content," the entire contents of which are incorporated herein by reference.

### Field of the Invention

The present disclosure relates to computer information technologies. More particularly, the present disclosure relates to methods, systems, and apparatus for transmitting digital content.

### Background of the Invention

With the development and the increasing popularity of the Internet, digital content has gained in both variety and quantity. The protection of digital content has also gained significant attention. Typically, certificate files are used to protect digital content from unauthorized access or distribution.

In an exemplary process of transmitting digital content, a server receives a request for the digital content from an authorized client terminal and then generates a certificate file of the digital content using key information, hardware information of the authorized client terminal, etc. The server then encrypts the digital content using an encryption algorithm based on the key information. The server distributes the digital content encrypted by the key information and the corresponding certificate file to the authorized client terminal. The client terminal decrypts the encrypted digital content using the obtained certificate file. In this way, the digital content can be used legally by authorized users and unauthorized access or distribution of the digital content can be prevented. The intellectual property right of a provider of the digital content can be therefore protected.

In the above process, the certificate file has to be generated on-the-fly using the hardware information of the authorized client terminal, the key information of the digital content, etc., using a complex algorithm. When the server experiences a high level of concurrent requests, this process can be time-consuming and require a considerable amount of resources of the server, thus decreasing the availability and the responsibility of the server.

To address this problem and to improve the performance of the server, the certificate service and other services are typically deployed separately on different servers, to solve the problem of insufficient resources of the server due to the generation of certificate files. However, when the amount of concurrent requests becomes large, the certificate server may become a bottleneck, thus affecting an overall service level. The certificate service can also be distributed to a plurality of servers to achieve load-balance. While such load-balancing method may address the bottleneck problem caused by highly concurrent requests, it also increases the software and hardware cost and requires increased maintenance effort.

Therefore, the process of generating certificate files still burdens the server and affects its performance and its capacity to handle concurrent requests, thereby decreasing the efficiency and success rate of transmitting digital content. It is desirable to develop a system and method to improve the efficiency of transmitting digital content.

### Summary of the Invention

Embodiments of the invention involve methods, systems, and apparatus for transmitting digital content to improve the success rate of the transmission.

An embodiment of the present disclosure provides a method of transmitting digital content. The method comprises: receiving a resource request transmitted from a first client terminal; searching in stored digital objects and stored certificate files for a first digital object and a first certificate file matching the resource request, respectively; and transmitting the first digital object and the first certificate file to the first client terminal to enable the first client terminal to decrypt the received digital object using the received first certificate file to obtain corresponding digital content.

Another embodiment of the invention provides a system for transmitting digital content. The system includes a server and a first client terminal. The server is configured to: receive a resource request transmitted from a first client terminal; search in stored digital objects and stored certificate files for a first digital object and a first certificate file matching the resource request, respectively; and transmit the first digital object and the first certificate file to the first client terminal. The first client terminal is configured to: receive the first digital object and the first certificate file; decrypt the received digital object using the received first certificate file; and obtain corresponding digital content.

Another embodiment of the invention provides an apparatus for transmitting digital content. The apparatus comprise: a receiving unit configured to receive a resource request; a searching unit configured to search in stored digital content and stored certificate files for a first digital object and a first certificate file matching the resource request, respectively; and a transmitting unit configured to transmit the first digital object and the first certificate file.

In the embodiments of the invention, a first digital object and a first certificate file matching a resource request can be searched in the stored digital objects and the stored certificate files, respectively. The first digital object and the first certificate file obtained through the search can then be transmitted. Therefore, no certificate file needs to be generated on-the-fly during the transmission process, thereby greatly reducing resource requirement of a system, alleviating the stress of the server, and improving the capacity of handling concurrent requests. The success ratio of transmitting digital content and the reliability of transmitting the digital content by means of certificate file(s) can also be improved.

### Brief Description of the Drawings

Fig.1 is a flow chart of an exemplary method of transmitting digital content according to some disclosed embodiments;
Fig. 2 is a block diagram of an exemplary system for transmitting digital content according to some disclosed embodiments; and
Fig. 3 is a block diagram of an exemplary apparatus for transmitting digital content according to some disclosed embodiments.

### Detailed Description of the Embodiments

In some embodiments, certificate files including both digital content and hardware information of a client terminal can be pre-generated and stored. When transmitting digital content, a certificate file matching a resource request can be searched from the stored certificate files, and then the certificate file obtained from the search and encrypted data content that are requested can be transmitted. Therefore, the calculation burden can be reduced in the transmitting process, thereby saving the resources of a server system, alleviating the stress of the server that provides digital content, and improving the capacity of handling concurrent requests and the success ratio of transmission.

In some embodiments, the server providing digital content may perform information management on the available digital content. For example, each piece of available digital content can be imported, and a unique resource identifier can be generated for each piece of imported digital content. In some embodiments, each piece of digital content can be numbered. For example, each piece of digital content may correspond to a unique number. Random key information can be generated for each piece of digital content, and then the corresponding digital content can be encrypted using the generated key information. A digital object corresponding to each piece of digital content can be obtained and stored. A process of generating the key information and a process of encryption using the key information can be performed using any suitable methods. A first correspondence relationship between the resource identifier and a storage path of the digital object can be created and stored.

An example of the first correspondence relationship is depicted in Table 1:

**Table 1**

| Resource identifier | Name of digital content | Storage path of digital object | Key information |
|---|---|---|---|
| 01 | File 1 | D:f1/f1 | 0011 |
| 02 | File 2 | D:f1/f2 | 1101 |
| ... | ... | ... | ... |

While the foregoing example of the first correspondence relationship is represented in a table, the invention is not limited to such representation and other embodiments may include different formats, such as a database format, a tree-like text structure, etc.

In the above embodiments, the server providing digital content may pre-generate random key information for the digital content and unique resource identifiers corresponding to the digital content. The server may encrypt the digital content using the key information, obtain and store digital objects corresponding to the digital content, and store first correspondence relationship between the resource identifiers and the storage paths of the digital objects.

It is noted that the foregoing description is merely an exemplary mechanism to manage digital content. The first correspondence relationship may include the resource identifiers, the names of the digital content, the storage paths of the digital objects, and the key information. In an embodiment of the invention, a correspondence relationship among the digital content, the digital objects, the resource identifiers, and the key information can be stored directly.

In some embodiments, the server providing digital content may further store a certificate file. For example, the server may obtain hardware information of each client terminal and relevant information of each piece of digital content. The relevant information may include resource identifiers uniquely corresponding to the digital content and key information to encrypt the data content. The server may then generate a certificate file according to the hardware information of a client terminal and the relevant information of a piece of digital content. The server may generate and store a plurality of or, in some embodiment, all available certificate files based on hardware information of each client terminal and the relevant information of each piece of digital content. Therefore, a second correspondence relationship among the hardware information of the client terminal, the resource identifier, and a storage path of the certificate file can be created and stored.

An exemplary second correspondence relationship is depicted in Table 2:

**Table 2**

| Hardware information of client terminal | Resource identifier | Storage path of certificate file |
|---|---|---|
| Hardware information of client terminal 1 | 01 | C:file1 |
| | 02 | C:file/f2 |
| | ... | ... |
| Hardware information of client terminal 2 | 01 | C:file/f1/f1 |
| | 02 | C:file fl//f2 |
| | ... | ... |
| ... | ... | ... |

In Table 2, the second correspondence relationship can be created with the hardware information of the client terminal being an index. It is noted that Table 2 is only exemplary. The second correspondence relationship can be created with the resource identifier being an index. In some embodiments, the second correspondence relationship can be represented in a tree-like text structure.

In the above embodiments, the server providing digital content can pre-obtain hardware information of client terminals and relevant information of the digital content. The server may generate and store a certificate file based on the hardware information of the client terminals and the relevant information. The relevant information may include unique resource identifiers corresponding to the digital content and key information to encrypt the data content. The server may store a second correspondence relationship among the hardware information of the client terminals, the resource identifiers, and the storage paths of the certificate files.

It is noted that the foregoing description is merely an exemplary mechanism to manage certificate files. In some embodiments, a correspondence relationship among the hardware information of the client terminals, the resource identifiers, and the certificate files can be stored directly.

In some embodiments, the server providing digital content may manage hardware information of a client terminal, for example, a registered client terminal. The server may receive a registration request from a client terminal and obtain device information of the client terminal from the registration request. The registration information may include an identifier of a central processor unit, an identifier of a hard disk, an identifier of a network card, etc. Hardware information can then be generated from the device information. For example, the identifier of the central processor unit, the identifier of the hard disk, the identifier of the network card, etc. can be combined under a preset rule to form hardware information. Alternatively or additionally, the identifier of the central processor unit, the identifier of the hard disk, the identifier of the network card, etc. can be encrypted into hardware information. The server can then store the generated hardware information of the client terminal.

Device information of client terminals can also be imported in batch. The hardware information of the client terminals can then be generated from the batch-imported device information and stored.

When a certificate file is to be generated, hardware information of a client terminal can be obtained from the stored device information.

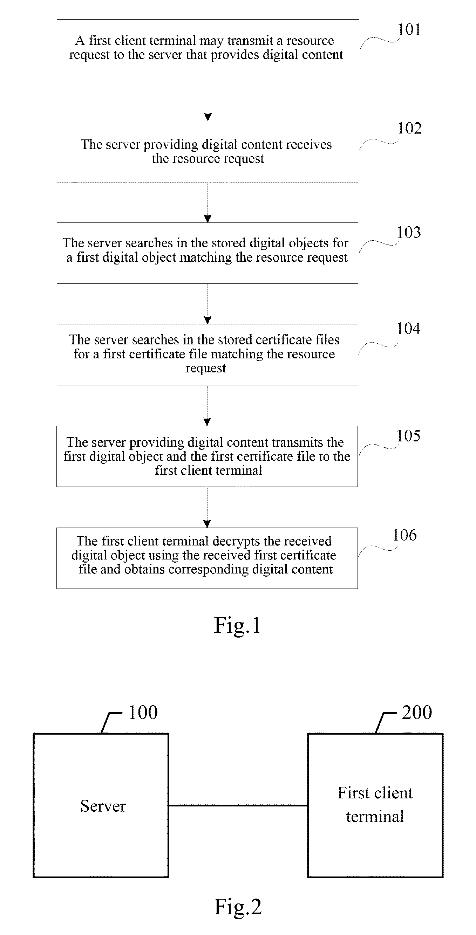

After the server stores the hardware information of the client terminals, the digital content, and the certificate files, the server may transmit the digital content to a first client terminal that requests a resource from the server. Fig.1 illustrates an exemplary method of transmitting the digital content.

Step 101: A first client terminal may transmit a resource request to the server that provides digital content.

Here the server can list some information of the available digital content, and the client terminal can make selection according to the information. The client terminal may then transmit a resource request to the server. Alternatively, the client terminal may transmit a resource request entered directly by a user.

The resource request may include a first resource identifier and hardware information of the first client terminal.

Step 102: The server receives the resource request.

Step 103: The server may search the stored digital objects for a first digital object matching the resource request.

Because the server has stored the digital objects and the first correspondence relationship between the resource identifiers and the storage paths of the digital objects, the first correspondence relationship can be searched for a first storage path matching the first resource identifier carried in the resource request to obtain a corresponding first digital object.

For example, if the first resource identifier is 02, the first correspondence relationship as depicted in Table 1 can be searched for the first storage path D:f1/f2 corresponding to 02. Then the corresponding first digital object can be obtained according to the first storage path D:f1/f2.

Step 104: The server can search among the stored certificate files for a first certificate file matching the resource request.

Because the server has stored the certificate files and the second correspondence relationship among the hardware information of the client terminals, the resource identifiers, and the storage paths of the certificate files, the second correspondence relationship can be searched for a second storage path matching both the hardware information of the first client terminal and the first resource identifier carried in the resource request, and a corresponding first certificate file can be obtained according to the second storage path.

For example, if in the resource request, the first resource identifier is 02 and the hardware information of the first client terminal is the hardware information of the client terminal 1, the second correspondence relationship as depicted in Table 2 can be searched for the second storage path C:file/f2. Then the corresponding first certificate file can be obtained according to the second storage path.

Step 105: The server providing digital content may transmit the first digital object and the first certificate file to the first client terminal.

Step 106: The first client terminal may decrypt the received digital object using the received first certificate file and obtain corresponding digital content.

The digital object can be generated by encrypting the digital content using the key information.

The certificate file can be generated from the hardware information of the client terminal and relevant information of the digital content. The relevant information may include the resource identifier of the digital content and the key information to encrypt the digital content. The key information can be obtained from the certificate file. The digital object can be decrypted using the key information to obtain the digital content.

In the foregoing process, step 103 and step 104 may be performed in different order. That is, step 103 may be performed before or after step 104.

In the foregoing process of transmitting digital content, the digital content and the certificate files has been pre-created and stored. Therefore, in the transmission process, a first digital object and a first certificate file matching a resource request can be obtained through a searching processing among the stored digital objects and the stored certificate files. The first digital object and the first certificate file obtained by the search can be transmitted. As such, certificate file(s) are not generated by calculation on-the-fly in the transmission process, thereby greatly reducing resource requirement of the system, alleviating the stress of the server, and improving the capacity of handling concurrent requests. The success ratio of transmitting digital content and the reliability of transmitting the digital content by means of certificate file(s) can also be improved.

An exemplary system for transmitting digital content is illustrated in Fig. 2. The system may include a server 100 and a first client terminal 200.

Server 100 may be configured to receive a resource request transmitted from first client terminal 200, to search in stored digital objects and stored certificate files for a first digital object and a first certificate file matching the resource request, respectively, and to transmit the first digital object and the first certificate file to first client terminal 200.

First client terminal 200 may be configured to receive the first digital object and the first certificate file, to decrypt the received digital object using the received first certificate file, and to obtain corresponding digital content.

Server 100 may be configured to manage hardware information of client terminals, the digital content, and certificate files. Server 100 may be further configured to pre-generate random key information for the digital content. Server 100 may be configured to pre-generate unique resource identifiers corresponding to the digital content. Server 100 may be configured to encrypt the digital content using the key information and to obtain and store digital objects. Server 100 may be configured to store a first correspondence relationship between the resource identifiers and storage paths of the digital objects.

In the searching process, server 100 may be configured to search in the stored first correspondence relationship for a first storage path matching a first resource identifier carried in the resource request and to obtain the corresponding first digital object according to the first storage path.

Server 100 may be further configured to pre-obtain hardware information of client terminals and relevant information of the digital content and to generate certificate files from the hardware information of the client terminals and the relevant information. The relevant information may include resource identifiers corresponding uniquely to the digital content and key information to encrypt the digital content. Server 100 may be further configured to store a second correspondence relationship among the hardware information of the client terminals, the resource identifiers, and storage paths of the certificate files.

In the searching process, server 100 may be configured to search in the stored second correspondence relationship for a second storage path corresponding to both hardware information of the first client terminal and a first resource identifier carried in the resource request to obtain a first certificate file according to the second storage path.

Server 100 may be further configured to receive a registration request from the client terminal and to obtain the hardware information of the client terminal from the registration request.

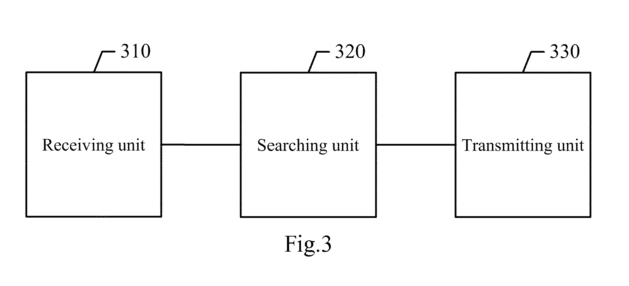

Some embodiments may involve an apparatus for transmitting digital content. An exemplary apparatus is illustrated in Fig. 3. The apparatus may include a receiving unit 310, a searching unit 320, and a transmitting unit 330.

Receiving unit 310 may be configured to receive a resource request.

Searching unit 320 may be configured to search stored digital content and stored certificate files for a first digital object and a first certificate file matching the resource request, respectively.

Transmitting unit 330 may be configured to transmit the first digital object and the first certificate file.

The apparatus may be configured to create a mechanism to manage hardware information of client terminals, the digital content, and certificate files. The apparatus may further include a first storing unit configured to pre-generate random key information for the digital content and resource identifiers corresponding uniquely to the digital content. The apparatus may be configured to encrypt the digital content using the key information and to obtain and store digital objects. The apparatus may be configured to store a first correspondence relationship between the resource identifiers and storage paths of the digital objects.

Searching unit 320 may be configured to search in the stored first correspondence relationship for a first storage path matching a first resource identifier carried in the resource request and to obtain the corresponding first digital object according to the first storage path.

The apparatus may further include a second storing unit configured to pre-obtain hardware information of client terminals and relevant information of the digital content and to generate certificate files from the hardware information of the client terminals and the relevant information. The relevant information may include resource identifiers corresponding uniquely to the digital content and key information to encrypt the digital content. The apparatus may be configured to store a second correspondence relationship among the hardware information of the client terminals, the resource identifiers, and storage paths of the certificate files.

Searching unit 320 may be configured to search in the stored second correspondence relationship for a second storage path corresponding to both hardware information of the first client terminal and a first resource identifier carried in the resource request and to obtain a first certificate file according to the second storage path.

Receiving unit 310 may be further configured to receive a registration request and to obtain the hardware information of the client terminal from the registration request.

The apparatus for transmitting digital content can be applicable in a server providing digital content.

In some embodiments of the invention, hardware information of client terminals, digital content, and certificate files may be pre-created. Therefore, in the process of transmitting digital content, a first digital object and a first certificate file matching a resource request can be obtained through a searching process among the stored digital objects and the stored certificate files. The first digital object and the first certificate file obtained through the search may then be transmitted. Therefore, no certificate file needs to be generated on-the-fly during the transmission process, thereby greatly reducing resource requirement of a system, alleviating the stress of the server, and improving the capacity of handling concurrent requests. The success ratio of transmitting digital content and the reliability of transmitting the digital content by means of certificate file(s) can also be improved.

Those skilled in the art shall appreciate that the embodiments of the invention can be embodied as a method, a system, or a computer program product encoded into a computer readable medium. Therefore, the invention can be embodied in the form of a hardware embodiment, a software embodiment, or an embodiment of software and hardware in combination. Furthermore, the invention can be embodied in the form of a computer program product implemented in one or more computer useable storage media (including but not limited to a disk memory, CD-ROM, an optical memory, etc.) in which computer useable program codes are contained.

The invention has been described in a flow chart and/or a block diagram of the method, the device (system), and/or the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the above embodiments have been described, persons skilled in the art could make further modifications and variations to the specific embodiments disclosed above once they learn the basic concept of the invention. Therefore, it is intended to be interpreted that the appended claims cover all such modifications and variations as fall within the true scope of this present invention.

Evidently those skilled in the art can make various modifications and variations to the invention without departing from the spirit and scope of the invention. Thus, the invention is also intended to encompass these modifications and variations thereto so long as the modifications and variations come into the scope of the claims appended to the invention and their equivalents.

## Claims

1. A method of transmitting digital content, comprising:
receiving a resource request transmitted from a first client terminal;
searching in stored digital objects and stored certificate files for a first digital object and a first certificate file matching the resource request, respectively; and
transmitting the first digital object and the first certificate file to the first client terminal to enable the first client terminal to decrypt the received digital object using the received first certificate file to obtain corresponding digital content.

2. The method according to claim 1, wherein the stored digital objects are pre-stored by:
pre-generating random key information for the digital content and resource identifiers corresponding uniquely to the digital content, encrypting the digital content using the key information, and obtaining and storing the digital objects; and
storing a first correspondence relationship between the resource identifiers and storage paths of the digital objects;
wherein searching for the first digital object matching the resource request comprises:
searching in the first correspondence relationship for a first storage path matching a first resource identifier carried in the resource request; and
obtaining the first digital object according to the first storage path.

3. The method according to claim 1 or 2, wherein the stored certificate files are pre-stored by:
pre-obtaining hardware information of client terminals and relevant information of the digital content, generating the certificate files from the hardware information of the client terminals and the relevant information, wherein the relevant information includes resource identifiers corresponding uniquely to the digital content and key information to encrypt the digital content; and
storing a second correspondence relationship among the hardware information of the client terminals, the resource identifiers, and storage paths of the certificate files,
wherein searching for the first certificate file matching the resource request comprises:
searching in the second correspondence relationship for a second storage path corresponding to both hardware information of the first client terminal and a first resource identifier carried in the resource request; and
obtaining the first certificate file according to the second storage path.

4. The method according to claim 3, wherein pre-obtaining the hardware information of the client terminals comprises:
receiving a registration request from the client terminals; and
obtaining the hardware information of the client terminals from the registration request.

5. A system for transmitting digital content, comprising:
a server configured to:
receive a resource request transmitted from a first client terminal;
search in stored digital objects and stored certificate files for a first digital object and a first certificate file matching the resource request, respectively; and
transmit the first digital object and the first certificate file to the first client terminal for decrypting the received digital object using the received first certificate file and obtaining corresponding digital content.

6. The system according to claim 5, wherein:
the server is further configured to:
pre-generate random key information for the digital content and resource identifiers corresponding uniquely to the digital content;
encrypt the digital content using the key information;
obtain and store the digital objects; and
store a first correspondence relationship between the resource identifiers and storage paths of the digital objects.

7. The system according to claim 6, wherein:
the server is further configured to search in the first correspondence relationship for a first storage path matching a first resource identifier carried in the resource request and to obtain the first digital object according to the first storage path.

8. The system according to claim 5 or 6, wherein:
the server is further configured to:
pre-obtain hardware information of client terminals and relevant information of the digital content;
generate the certificate files from the hardware information of the client terminals and the relevant information, wherein the relevant information includes resource identifiers corresponding uniquely to the digital content and key information to encrypt the digital content; and
store a second correspondence relationship among the hardware information of the client terminals, the resource identifiers, and storage paths of the certificate files.

9. The system according to claim 8, wherein:
the server is further configured to search in the second correspondence relationship for a second storage path corresponding to both hardware information of the first client terminal and a first resource identifier carried in the resource request and to obtain the first certificate file according to the second storage path.

10. An apparatus for transmitting digital content, comprising:
a receiving unit configured to receive a resource request;
a searching unit configured to search in stored digital content and stored certificate files for a first digital object and a first certificate file matching the resource request, respectively; and
a transmitting unit configured to transmit the first digital object and the first certificate file.
